# EUROPEAN PATENT APPLICATION

(11) **EP 4 776 170 A1**
(43) Date of publication of application: **15.07.2026**
(21) Application number: 24862865.3
(22) Date of filing: 05.09.2024
(51) Int. Cl.: G06F 21/62, G06N 20/00

(54) **METHOD FOR GENERATING MACHINE LEARNING DATA, AND DEVICE FOR GENERATING MACHINE LEARNING DATA**

(30) Priority: 08.09.2023 JP 2023146468
(71) Applicant: ID Holdings Corporation, Tokyo, 102-0076 (JP)
(72) Inventor: MAKINO Takeaki, Tokyo 102-0076 (JP)
(74) Representative: Hasegawa, Kan
(86) International application number: PCT/JP2024/031842
(87) International publication number: WO 2025/053214

(57) **Abstract**

A sufficient volume of machine learning data can be prepared when a third party right is involved. License-requested portion information (23) and replacement data are added to target data (21) on a server. The license-requested portion information indicates a portion (license-requested portion (24)) to be licensed. The replacement data is to replace the license-requested portion of the target data that is not licensed. License information (30) indicating whether the license-requested portion is licensed is also produced. To generate machine learning data, the target data and the license information are read. The license-requested portion of the target data that is not licensed is replaced with the replacement data to generate the machine learning data. The machine learning data can thus be generated from target data that is not licensed, allowing a sufficient volume of machine learning data to be prepared easily.

## Description

### BACKGROUND OF INVENTION

### Field of the Invention

The present invention relates to a technique for generating machine learning data to generate an estimation model through machine learning.

### Background Art

Techniques for machine learning have recently seen notable progress. An example is practical use of a technique for building a highly accurate estimation model through preliminarily training using a large volume of data about general knowledge followed by training using data specific to, for example, the field or purpose of use. Hereafter, such data specific to, for example, the field or purpose of use is referred to as specific data, and training using specific data is referred to as fine-tuning. Data about general knowledge is referred to as general data, and preliminary training using general data is referred to as pre-training.

Building a highly accurate estimation model typically uses a large volume of data for training, but preparing a large volume of specific data is difficult. Thus, pre-training is performed first using a large volume of general data, which is easily available, and then fine-tuning is performed using a smaller volume of specific data than the general data. A highly accurate estimation model can thus be built relatively easily.

After a highly accurate estimation model is built, the estimation accuracy may be gradually lowered with subsequent changes in environmental conditions. Thus, various techniques have been developed to maintain the accuracy of the estimation model by continuing collecting new specific data to perform fine-tuning after the estimation model is built (e.g., Patent Literature 1).

Such continued fine-tuning may rather lower the accuracy of an estimation model. Thus, techniques have also been developed for storing data used in the continued fine-tuning (in other words, specific data), and verifying the specific data used in the training when the accuracy of the estimation model is lowered (Patent Literature 2).

Such specific data pieces are less easily available than general data used in pre-training, and are more likely to contain items associated with a third party right (e.g., copyright, the right to privacy, or a trade secret) than general data. When the specific data used in training contains items associated with a third party right, such data is subsequently to be licensed from the third party. Without the data being licensed, the estimation model is to be discarded. To avoid this, specific data containing items associated with a third party right is to be licensed before being used for training.

### CITATION LIST

### PATENT LITERATURE

Patent Literature 1: Japanese Unexamined Patent Application Publication No. 2023-086053
Patent Literature 2: Japanese Unexamined Patent Application Publication No. 2022-150778

### SUMMARY OF INVENTION

### TECHNICAL PROBLEM

However, collecting a sufficient volume of machine learning data can be difficult when machine learning data to be licensed from a third party, such as specific data, cannot be licensed. With an insufficient volume of machine learning data, the estimation model cannot achieve sufficient accuracy.

In response to the above issue with the known technique, one or more aspects of the present invention are directed to a technique for easily obtaining a sufficient volume of machine learning data when the data involves a third party right.

### SOLUTION TO PROBLEM

A machine learning data generation method according to an aspect of the present invention is a machine learning data generation method for generating, with a computer, machine learning data to generate an estimation model through machine learning. The method includes reading target data stored in a server, reading license information indicating whether the target data is licensed for use in the machine learning, and generating the machine learning data based on the target data and the license information. The reading the target data includes reading the target data to which license-requested portion information and replacement data are added. The license-requested portion information indicates one or more license-requested portions being one or more portions of the target data describing or representing an item to be licensed. The replacement data is to replace the one or more license-requested portions of the target data when the one or more license-requested portions are not licensed. The generating includes generating the machine learning data by replacing the one or more license-requested portions of the target data with the replacement data based on the license information.

The machine learning data generation method according to the above aspect of the present invention may also be implemented as a machine learning data generation apparatus for generating machine learning data. More specifically, a machine learning data generation apparatus according to an aspect of the present invention is a machine learning data generation apparatus for generating machine learning data to generate an estimation model through machine learning. The apparatus includes a target data reader that reads target data stored in a server, a license information reader that reads license information indicating whether the target data is licensed for use in the machine learning, and a machine learning data generator that generates the machine learning data based on the target data and the license information. The target data reader reads the target data to which license-requested portion information and replacement data are added. The license-requested portion information indicates one or more license-requested portions being one or more portions of the target data describing or representing an item to be licensed. The replacement data is to replace the one or more license-requested portions of the target data when the one or more license-requested portions are not licensed. The machine learning data generator generates the machine learning data by replacing the one or more license-requested portions of the target data with the replacement data based on the license information.

With the machine learning data generation method and the machine learning data generation apparatus according to the above aspects of the present invention, license-requested portion information and replacement data are added to target data in advance. The license-requested portion information indicates a license-requested portion being a portion of the target data describing or representing an item to be licensed (e.g., wording, text, a graphic, or a graph). The replacement data is to replace a license-requested portion of the target data when the license-requested portion is not licensed. To generate machine learning data, the target data and the license information are read. The target data is data to which the license-requested portion information and the replacement data are added. The license information indicates whether the target data is licensed for use in machine learning. The determination is performed, based on the license information, as to whether the license-requested portion corresponding to the license-requested portion information is licensed. When not licensed, the license-requested portion of the target data is replaced with the replacement data to generate machine learning data.

With this technique, the replacement data is prepared to correct the license-requested portion to avoid infringing a third party right or to allow the portion to be licensed. When the license-requested portion of the target data is not licensed, the portion is replaced with the replacement data to generate machine learning data. When the target data contains a license-requested portion that is licensed and a license-requested portion that is not licensed, the license-requested portion of the target data that is not licensed is replaced with the replacement data. Machine learning data can thus be generated from target data involving a third party right. The license-requested portion of the target data that is not licensed can be replaced with appropriate replacement data prepared in advance, rather than being concealed by, for example, blacking the portion out. Thus, machine learning data fully usable for machine learning can be generated from target data containing a license-requested portion that is not licensed. A sufficient volume of machine learning data can thus be obtained easily.

With the machine learning data generation method and the machine learning data generation apparatus according to the above aspects of the present invention, the license-requested portion information added to the target data may be described in a layer separate from the layer of the target data.

This technique can easily identify a portion of the target data to be licensed from a third party, and can thus easily add the license-requested portion information to the target data. The technique can also clearly identify, without ambiguity, a portion to be licensed from a third party, and can thus easily produce the replacement data. Further, the target data is not entirely modified, and thus such modification raises no copyright issue.

With the machine learning data generation method and the machine learning data generation apparatus according to the above aspects of the present invention, to generate machine learning data, the target data to which the replacement data is added for each of the one or more license-requested portions may be read, and the license information indicating whether each of the one or more license-requested portions is licensed may be read.

This technique can generate appropriate machine learning data from target data containing multiple license-requested portions.

With the machine learning data generation method and the machine learning data generation apparatus according to the above aspects of the present invention, to generate machine learning data, the license information containing a partial license may be read, and the target data to which the replacement data corresponding to the partial license is added may be read. The partial license refers to a license with a limitation on, for example, the license-requested portion of the target data, the licensor, or the purpose of use of the estimation model generated through machine learning. The license-requested portion of the target data partially licensed may be replaced with the replacement data for the partial license to generate machine learning data.

This technique can generate machine learning data from target data partially licensed, although the target data is not unlimitedly licensed.

With the machine learning data generation method and the machine learning data generation apparatus according to the above aspects of the present invention, replacement information may be generated during or after generation of the machine learning data. The replacement information 40 may be stored into a distributed ledger in a blockchain form. The replacement information may contain information for identifying the target data, the license-requested portion information, and the replacement data replacing each of the one or more license-requested portions.

This technique facilitates subsequent verification that the machine learning data was generated under license from a third party. This avoids a situation in which the estimation model generated through machine learning is suspected of using machine learning data that is not licensed from a third party and the estimation model is to be discarded.

### BRIEF DESCRIPTION OF THE DRAWINGS

FIG. 1 is a schematic diagram describing a machine learning data generation apparatus 10 according to an embodiment.
FIG. 2 is a schematic diagram describing machine learning including pre-training and fine-tuning.
FIG. 3 is a diagram describing the data structure of a target data set 20 to be read by the machine learning data generation apparatus 10 according to the present embodiment.
FIG. 4 is a conceptual diagram describing the relationship between target data 21 and license-requested portion information 22 in the target data set 20.
FIG. 5 is a conceptual diagram describing replacement data in the target data set 20.
FIG. 6 is a diagram describing license information 30 to be read to generate machine learning data.
FIG. 7 is a flowchart of the first half of a process of generating machine learning data.
FIG. 8 is a flowchart of the second half of the process of generating machine learning data.
FIG. 9 is a flowchart of a process of storing replacement information 40 in a blockchain form.
FIG. 10 is a diagram describing the data structure of the replacement information 40.
FIG. 11 is a diagram describing the replacement information 40 stored in a blockchain form.
FIG. 12 is a diagram describing the mechanism by which the machine learning data generation apparatus 10 according to the present embodiment allows a sufficient volume of specific data to be prepared easily.

### DETAILED DESCRIPTION

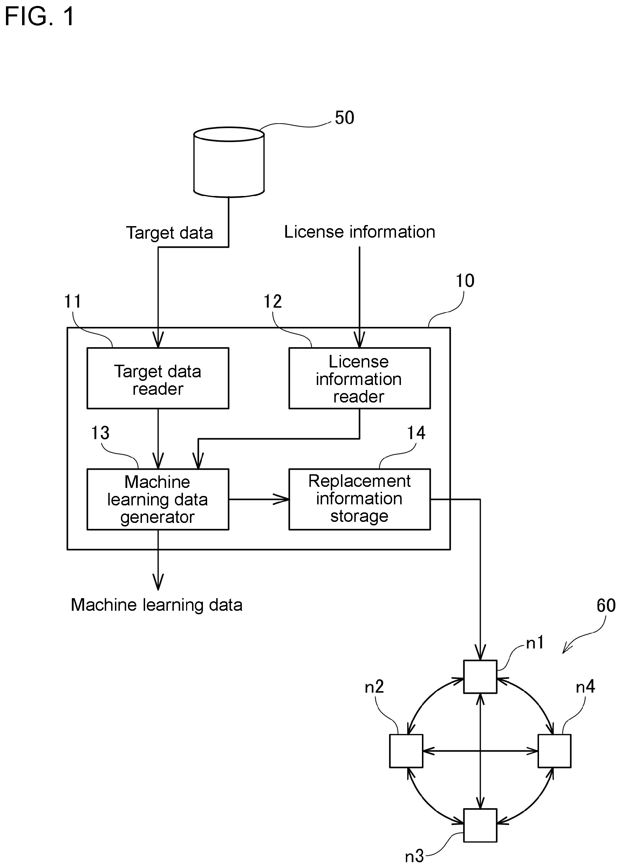

FIG. 1 is a schematic diagram describing a machine learning data generation apparatus 10 according to an embodiment. As illustrated, the machine learning data generation apparatus 10 according to the present embodiment generates machine learning data by reading target data stored in a server 50 and predefined license information and performing a predetermined process on the target data and the license information. The target data is used for training in machine learning. The target data includes, for example, text data, image data, or a combination of text data and image data. As described later, the machine learning data generation apparatus 10 according to the present embodiment reads target data to which license-requested portion information and replacement data (described later) are added, rather than reading target data alone.

The license information indicates whether target data is licensed for use in machine learning. More specifically, target data may contain items associated with a third party right (e.g., the right to privacy or copyright). Thus, when target data is used for machine learning without a license from a third party, the estimation model built through the machine learning is to be discarded in the worst case. Thus, the license information is predefined as information indicating whether target data contains items to be licensed and whether such contained items are licensed. The license information is also described in detail later.

The machine learning data generation apparatus 10 includes, for example, a target data reader 11, a license information reader 12, a machine learning data generator 13, and a replacement information storage 14. These units are conceptual representations of functions included in the machine learning data generation apparatus 10 to generate machine learning data. The machine learning data generation apparatus 10 thus may or may not include physical components corresponding to these units. These units may be implemented as software programs executable by a computer, or as hardware such as large-scale integration (LSI) circuits or integrated circuits (ICs). The units may also be implemented as a combination of software programs and hardware.

The target data reader 11 reads target data and provides the target data to the machine learning data generator 13. The license information reader 12 reads license information and outputs the license information to the machine learning data generator 13.

When receiving the target data and the license information, the machine learning data generator 13 refers to the license information to determine whether the target data is licensed. When licensed, the target data is used directly to generate machine learning data. In contrast, when not licensed, a portion of the target data not to be licensed yet is replaced with predefined replacement data to generate machine learning data. A process of generating machine learning data is described in detail later.

The replacement information storage 14 generates replacement information by receiving, from the machine learning data generator 13, information indicating, for example, a portion of the target data replaced with replacement data and indicating the replacement data that has replaced the portion. The replacement information storage 14 then stores the replacement information into a distributed ledger on a blockchain network 60. The blockchain network 60 includes multiple computer nodes (hereafter, nodes) connected to one another to enable mutual communication. When data is stored into one of the multiple nodes, the same data is also stored into the other nodes to form a distributed ledger. The replacement information storage 14 generates replacement information in a blockchain form, and transmits the replacement information to a node n1 on the blockchain network 60 to store the replacement information into the distributed ledger on the blockchain network 60. A method for generating the replacement information in a blockchain form is described in detail later.

The machine learning data generated by the machine learning data generation apparatus 10 described above is machine learning data (specific data) used in a training step referred to as fine-tuning in machine learning. Recent machine learning typically includes pre-training followed by fine-tuning. Machine learning data generated by the machine learning data generation apparatus 10 according to the present embodiment may be used particularly for fine-tuning. Before the main description, machine learning including pre-training and fine-tuning is described roughly.

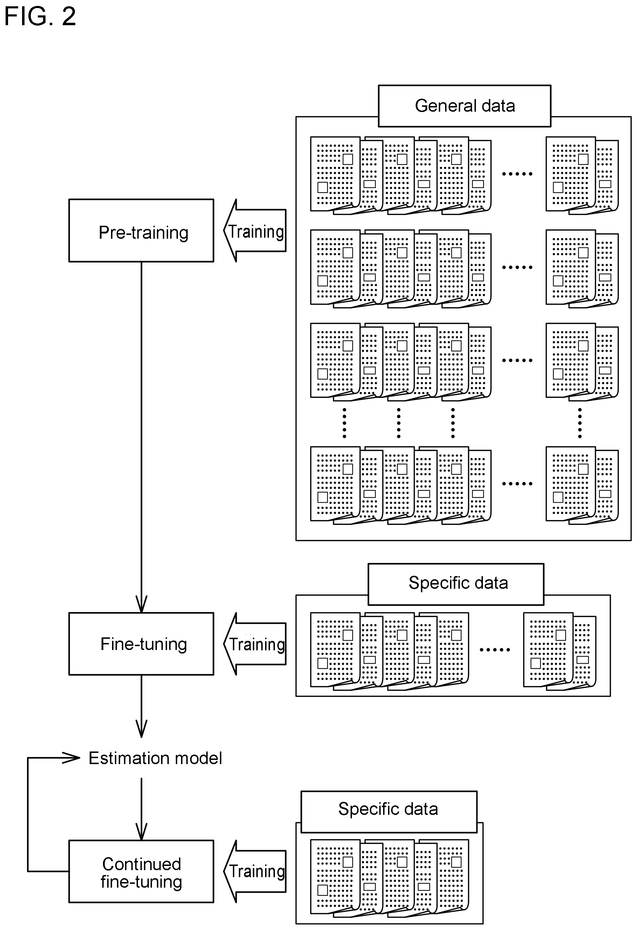

FIG. 2 is a schematic diagram describing machine learning including pre-training and fine-tuning. The currently dominating machine learning includes pre-training, or a first training step, in which a large volume of data (general data) about general knowledge is used for training. Such pre-training includes machine learning for generating a large language model. To generate a Japanese large language model, for example, a large volume of Japanese text data, which can be general knowledge, is used for training. Thus, although pre-training uses a large volume of data for machine learning, the data used for training is general data and can be relatively easily available.

The pre-training is followed by fine-tuning, or a second training step. In fine-tuning, data appropriate for an estimation model to be generated is prepared and used for machine learning. To generate an estimation model for use in the financial field, for example, the model is trained through machine learning using documents about economics, finance, or other such fields, including the latest possible materials. To generate an estimation model for use in the security field, the model is trained through machine learning using documents about computers, communications, security, or other such fields, including the latest possible materials. To adapt an estimation model to the circumstances of the site in which the model is used, the model is trained through machine learning additionally using documents, data, or other materials used at the site. In this manner, fine-tuning uses data (specific data) specific to, for example, the field or purpose of use for machine learning to generate an estimation model. Although a large volume of specific data is used for machine learning to generate a highly accurate estimation model, the volume of specific data to be used may be smaller than the volume of general data.

After an estimation model is built, the estimation accuracy may be gradually lowered with subsequent changes in environmental conditions. Thus, the estimation accuracy may be maintained by continuing collecting new specific data to perform fine-tuning and by updating the estimation model.

Specific data used in fine-tuning or continued fine-tuning indicates specific knowledge appropriate for the purpose or use of an estimation model. Preparing a large volume of specific data is thus difficult, unlike preparing general data. Further, specific data, which indicates specific knowledge, is likely to contain items associated with a third party right (e.g., copyright, the right to privacy, or a trade secret). To obtain a highly accurate estimation model, in particular, data used for training is to include the latest possible specific data, which is highly likely to contain items associated with a third party right. A sufficient volume of specific data is thus difficult to prepare. In contrast, the machine learning data generation apparatus 10 according to the present embodiment described above allows a sufficient volume of specific data to be prepared in the manner described below.

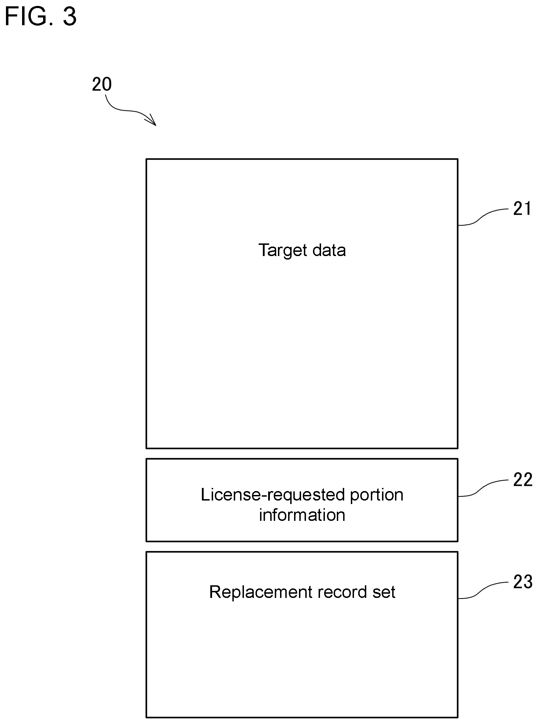

FIG. 3 is a diagram describing the data structure of a target data set 20 to be read by the machine learning data generation apparatus 10 according to the present embodiment. The target data set 20 has a data structure including target data 21 to be used for training in machine learning, license-requested portion information 22 added to the end of the target data 21, and a replacement record set 23 added to the end of the license-requested portion information 22. The license-requested portion information 22 indicates a portion of the target data 21 describing or representing an item to be licensed (hereafter, a license-requested portion).

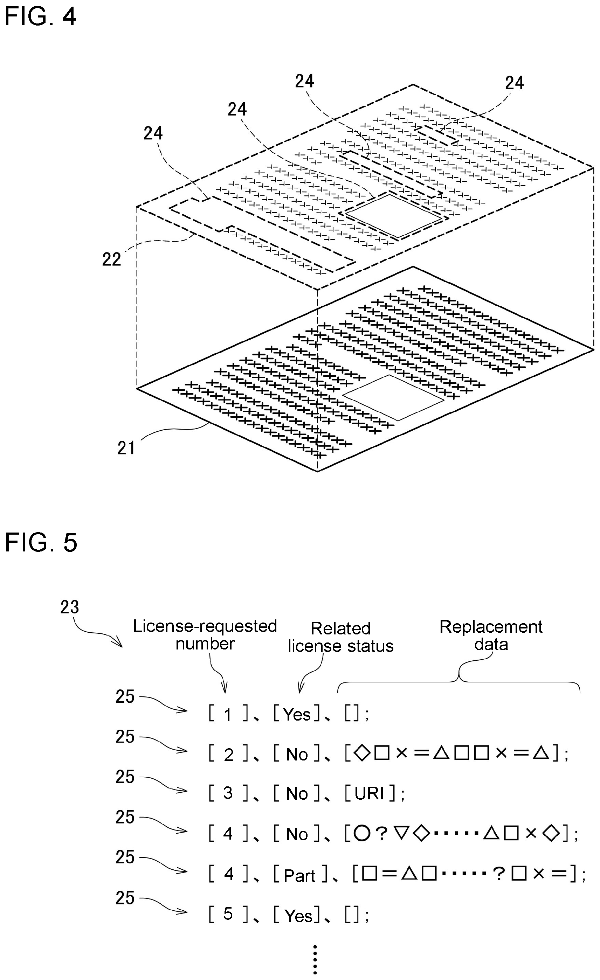

FIG. 4 is a conceptual diagram describing the relationship between the target data 21 and the license-requested portion information 22 in the target data set 20. As illustrated, the license-requested portion information 22 is added to the target data 21 as a layer separate from the layer of the target data 21, and specifies license-requested portions 24 on the separate layer. As illustrated, the license-requested portions 24 are represented on the layer separate from the layer of the target data 21. Thus, multiple descriptions or representations to be licensed contained in the target data 21 can be specified and identified easily. The license-requested portions 24 are numbered consecutively with license-requested numbers.

FIG. 5 is a conceptual diagram describing a replacement record set 23 contained in the target data set 20. As illustrated, the replacement record set 23 is a set of multiple replacement data records 25. Each replacement data record 25 contains a license-requested number, a related license status, and replacement data arranged in this order. The related license status refers to the license status rerated to the replacement data written subsequent to the related license status. For example, the second replacement data record 25 from the top in FIG. 5 corresponds to the license-requested portion 24 with the license-requested number 2, indicating that the license status "No" indicating being not licensed (in other words, a license not being obtained) is related to this replacement data.

In the replacement data record 25 at the top in FIG. 5, the space for replacement data is blank. For this record, no replacement data is to be used, with the license status being "Yes" indicating being licensed (in other words, a license being obtained) for the license-requested portion 24 with the license-requested number 1.

Both the fourth and fifth replacement data records 25 from the top in FIG. 5 have the license-requested number 4. In other words, two replacement data pieces are defined for the license-requested portion 24 with the license-requested number 4. For the license-requested portion 24 with the license-requested number 4, two cases are related with, or specifically, a license not being obtained (the related license status is "No") and a license being partially obtained (the related license status is "Part" indicating being partially licensed). Replacement data is thus to be used for each of these two cases.

In the example described above, a license not being obtained and a license being partially obtained are two possible options. In contrast, in a case that there are two possible options, a license being obtained and a license being partially obtained, the replacement data record 25 with the related license status "Yes" and the replacement data record 25 with the related license status "Part" are defined. When multiple replacement data records 25 have the same license-requested number, with regarding to one of the replacement data records 25 with the related license status "Yes", it is not necessary to be defined (described in detail later). Namely, when a license being obtained and a license being partially obtained are two possible options, the replacement data record 25 with the related license status "Part" alone may be defined.

In addition, second, fourth, and fifth replacement data records 25 from the top in FIG. 5, replacement data is directly described. In some embodiments, a uniform resource identifier (URI) in which the replacement data is stored may be defined, as in the third replacement data record 25 from the top.

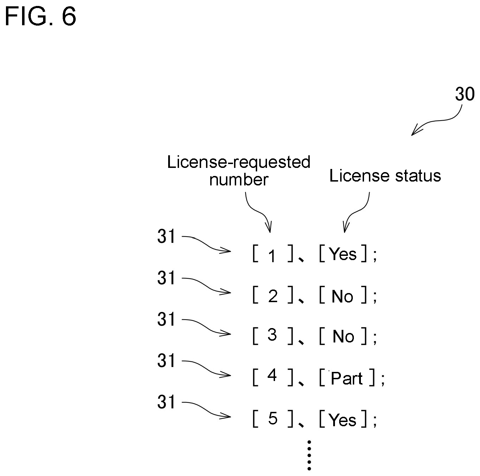

FIG. 6 is a diagram describing license information 30 to be read by the machine learning data generation apparatus 10 according to the present embodiment to generate machine learning data. As illustrated, the license information 30 is a set of multiple license status records 31. Each license status record 31 contains a license-requested number and a license status arranged in this order. The license status indicates whether the license-requested portion 24 corresponding to the license-requested number is licensed.

The machine learning data generation apparatus 10 according to the present embodiment reads the target data set 20 described above with reference to FIGs. 3 to 5 and the license information 30 described above with reference to FIG. 6, and performs a machine learning data generation process (described below) to generate machine learning data.

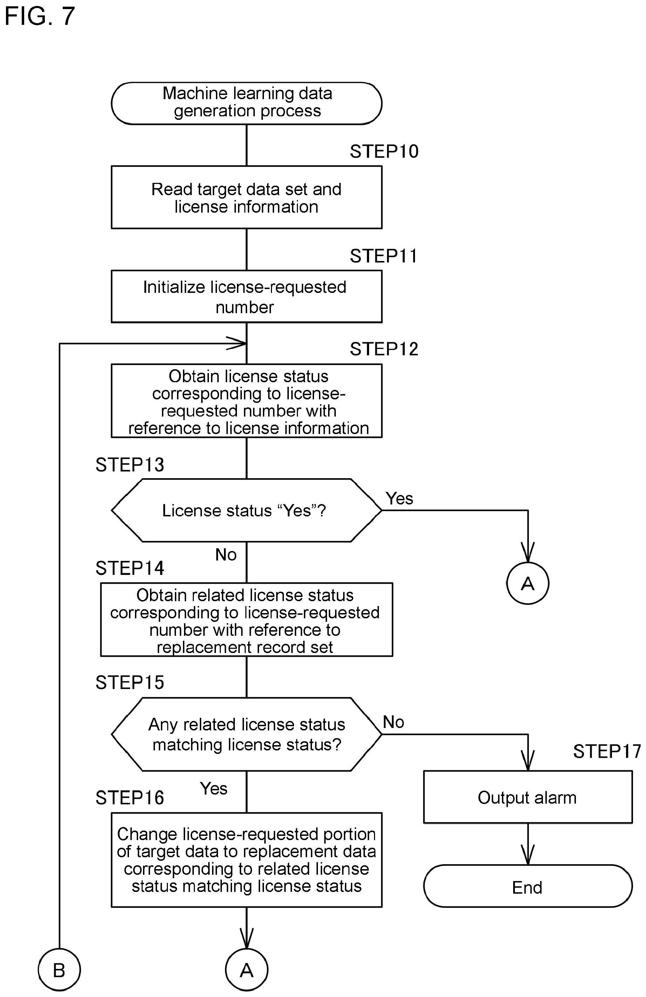

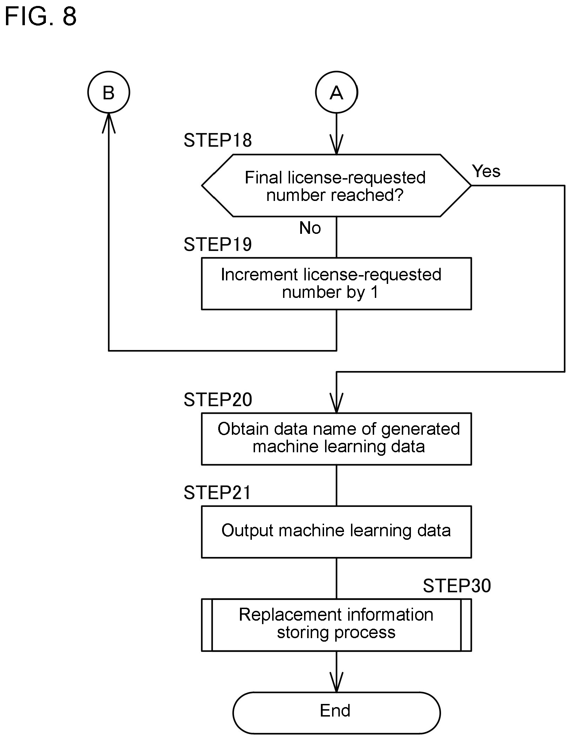

FIGs. 7 and 8 are each a flowchart of the machine learning data generation process. In the machine learning data generation process, the target data set 20 produced in advance and stored in the server 50 and the license information 30 produced in advance are read (STEP 10). The license-requested number is initialized to 1 (STEP 11). The license status corresponding to the current license-requested number is obtained with reference to the license information 30 (STEP 12). For example, immediately after the license-requested number is initialized in STEP 11, the license-requested number is 1. In this case, the license status "Yes" defined in the license status record 31 with the license-requested number 1 is obtained from the license information 30 illustrated in FIG. 6.

Subsequently, the determination is performed as to whether the license status obtained in STEP 12 is "Yes" (STEP 13). When the license status is "Yes" (Yes in STEP 13), the license-requested portion 24 of the target data 21 with the current license-requested number is not to be replaced with replacement data. In this case, the determination is performed as to whether the license-requested number has reached the final license-requested number (STEP 18 in FIG. 8). When the license-requested number has not reached the final license-requested number (No in STEP 18), the license-requested number is incremented by 1 (STEP 19). The processing then returns to STEP 12 in FIG. 7, in which the license status defined in the license status record 31 with a new license-requested number is obtained from the license information 30. The determination is then performed as to whether the obtained license status is "Yes" (STEP 13). When the license status is "Yes" (Yes in STEP 13), the determination is performed again as to whether the license-requested number has reached the final license-requested number. When the license-requested number has not reached the final license-requested number, the license-requested number is incremented by 1 (STEPs 18 and 19 in FIG. 8). The processing then returns to STEP 12 in FIG. 7 to repeat the same operations.

In contrast, when the license status obtained in STEP 12 is not "Yes" (No in STEP 13), the related license status corresponding to the license-requested number is obtained with reference to the replacement record set 23 in the target data set 20 (STEP 14). More specifically, as described above with reference to FIGs. 3 and 5, each replacement data record 25 in the replacement record set 23 contains the related license status and replacement data that are associated with the license-requested number. Thus, in STEP 14, the related license status associated with the current license-requested number is obtained. When multiple different related license statuses are defined for the same license-requested number, all the related license statuses are obtained (refer to FIG. 5).

The determination is then performed as to whether any related license status obtained in STEP 14 matches the license status obtained in STEP 12. For example, for the license-requested number 4 in the license information 30 in FIG. 6, the license status "Part" indicating a license being partially obtained is defined. In contrast, for the license-requested number 4 in the target data set 20 in FIG. 5, the related license status "No" and the related license status "Part" are defined. Thus, the related license status "Part" matches the license status "Part." When any related license status is determined to match the expected status (Yes in STEP 15), the license-requested portion 24 of the target data 21 is changed to the replacement data corresponding to the related license status matching the expected status (STEP 16).

After the license-requested portion 24 of the target data 21 with the corresponding license-requested number is replaced with the replacement data in the above manner, the determination is performed as to whether the license-requested number has reached the final license-requested number (STEP 18 in FIG. 8). When the license-requested number has not reached the final license-requested number (No in STEP 18), the license-requested number is incremented by 1 (STEP 19). The processing then returns to STEP 12 in FIG. 7, and the series of operations described above is started.

In contrast, when the determination result in STEP 15 is negative, or in other words, when no related license status obtained in STEP 14 matches the license status obtained in STEP 12, a predetermined alarm is output (STEP 17). The machine learning data generation process then ends. For example, the replacement record set 23 referred to in STEP 14 may include no replacement data record 25 with the related license status "No," although the license status obtained in STEP 12 is "No" indicating a license not being obtained. In this case, the license-requested portion 24 of the target data 21 cannot be replaced. Thus, an alarm indicating such information is output, and the process ends without generating machine learning data.

When the license-requested number is determined to have reached the final license-requested number in STEP 18 in FIG. 8 (Yes in STEP 18), the descriptions in the target data 21 that are not licensed have been replaced with the replacement data to generate machine learning data. The data name of the generated machine learning data is then obtained (STEP 20). The data name of the machine learning data may be defined when the machine learning data generation apparatus 10 reads the target data set 20 and the license information 30 in STEP 10 in FIG. 7. In some embodiments, an input of the data name may be requested in STEP 20, and the input data name may be read. The machine learning data with the obtained data name is then output (STEP 21).

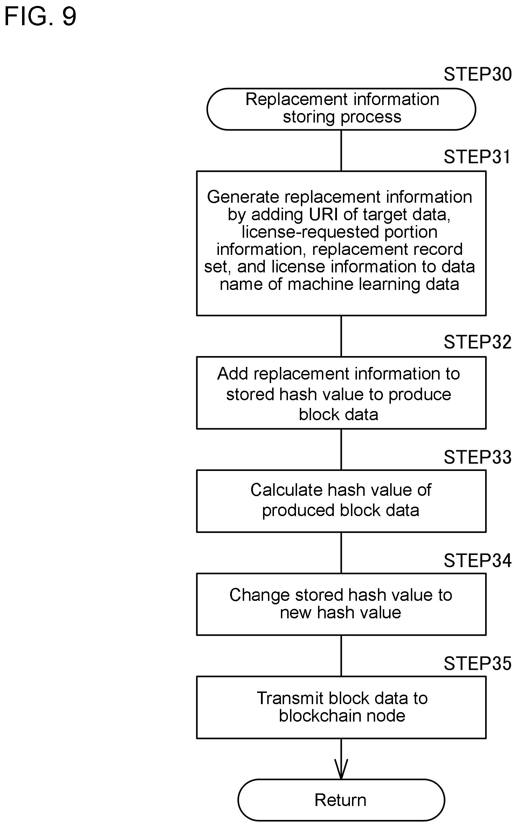

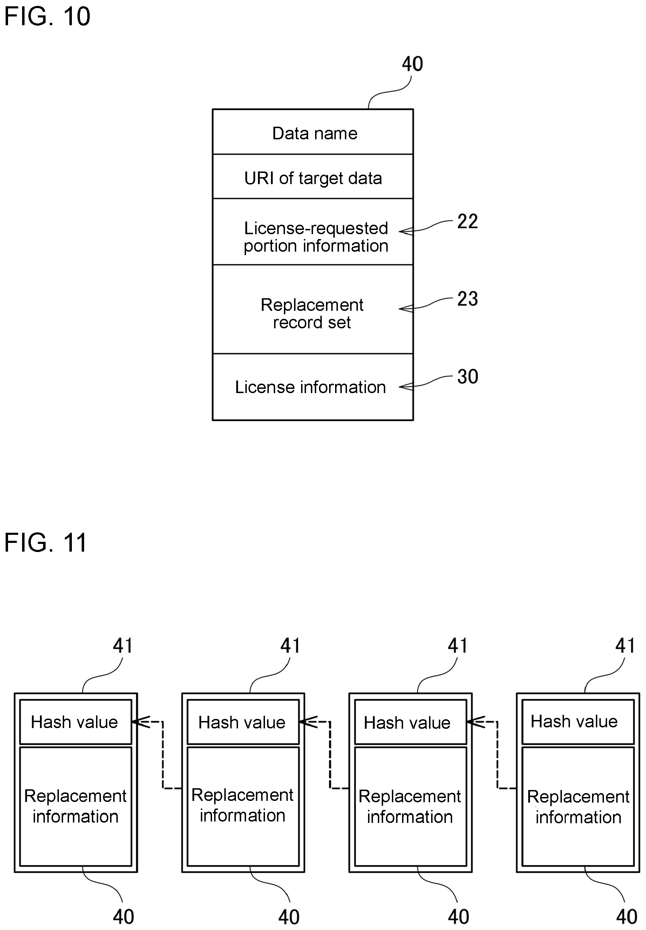

After the machine learning data is output, a replacement information storing process (STEP 30) described below is started to store the replacement information into the distributed ledger on the blockchain network 60. FIG. 9 is a flowchart of the replacement information storing process (STEP 30). Replacement information 40 refers to information that has replaced portions of the target data 21 to generate machine learning data. As shown in FIG. 10, the replacement information 40 includes the URI of the target data 21 used, the license-requested portion information 22 and the replacement record set 23 in the target data set 20, and the license information 30, which are added to the data name of the machine learning data.

As shown in FIG. 9, in the replacement information storing process, the replacement information 40 is generated by adding, to the data name of the machine learning data, the URI of the target data 21 used to generate the machine learning data, the license-requested portion information 22 and the replacement record set 23 in the target data set 20, and the license information 30 (STEP 31). With the target data 21 having a large data size, the URI of the target data 21, rather than the direct target data 21, is added to the data name of the machine learning data. The URI is sufficient to identify the target data 21, which is a document or other materials stored in another organization (typically, a public organization) rather than materials produced specifically for generating machine learning data. In contrast, the license-requested portion information 22 and the replacement record set 23 in the target data set 20 and the license information 30 have been produced for generating machine learning data. Thus, for these pieces of data, the data itself is used. For generating the replacement information 40 in STEP 31, information indicating the time and date at which the machine learning data is output in STEP 21 in FIG. 8 may be obtained. Then, the replacement information 40 containing such time and date information may be generated. When the target data 21 has a small data size, the target data 21 itself (rather than its URI) may be used to generate the replacement information 40.

Although a third party holding a right involved in the target data 21 may permit use of the target data 21 for machine learning, the right holder may be reluctant to disclose the details of the target data 21 at least for some time. Such a right holder may have negative feelings that the details of the target data 21 may be disclosed with the URI of the target data 21 (or the target data 21 itself) contained in the replacement information 40, although the analysis of the estimation model built through machine learning does not cause identification of the details of the target data 21 and thus does not present issues. In this case, the URI of the target data 21 (or the target data 21 itself) may be encrypted or concealed with secure computation. In another case, the target data 21 itself identified by the URI may be encrypted or concealed with secure computation while the URI of the target data 21 is shown in a usual manner. These avoid disclosure of the details of the target data 21. These can allow the target data 21 to be licensed for use in machine learning from a right holder who is concerned about the disclosure of the details of the target data 21.

Subsequently, block data 41 is produced by adding the replacement information 40 obtained in STEP 31 to a stored hash value (STEP 32). The stored hash value is obtained by applying a predetermined hash function to block data 41 produced previously. The hash function converts data of any size to a hash value with a fixed data length. When data pieces differ partially before conversion, such data pieces are converted to totally different hash values, and each hash value is not reversible to the data before conversion. Thus, the hash value and the original data have a one-to-one relationship, and the hash value uniquely represents the data before the conversion.

After the block data 41 is obtained, the hash function is applied to the block data 41 to calculate a new hash value (STEP 33). The stored hash value is changed to the new hash value (STEP 34). This hash value is to be used to produce block data 41 subsequently.

The obtained block data 41 is then transmitted to the node n1 on the blockchain network 60 (STEP 35). The replacement information storing process in FIG. 9 then ends. The processing returns to the machine learning data generation process in FIGs. 7 and 8, and the machine learning data generation process ends. When the node n1 receives the block data 41, the node n1 transmits the block data 41 to other nodes n2 to n4 on the blockchain network 60. Thus, the block data 41 is stored into the distributed ledger on the blockchain network 60. In the example described above, a hash value is added to the replacement information to generate the block data 41, and the block data 41 is transmitted to the node n1 on the blockchain network 60 in the replacement information storing process. In some embodiments, the replacement information generated in the replacement information storing process may be transmitted to the node n1 on the blockchain network 60 without a hash value being added. The node n1 may then add a hash value to the replacement information to generate the block data 41, and may transmit the block data 41 to the other nodes n2 to n4.

FIG. 11 is a diagram describing pieces of block data 41 stored in the distributed ledger on the blockchain network 60. Each piece of block data 41 contains a hash value indicating the preceding piece of block data 41. The multiple pieces of block data 41 are thus stored in a manner linked linearly (in a blockchain form). The multiple pieces of block data 41 stored in such a blockchain form are known to be highly difficult to tamper with. When the replacement information in a piece of block data 41 is tampered with, the hash values of all the pieces of block data 41 linked to and following the piece of block data 41 that has been tampered with are to be changed. This makes the tampering of the replacement information extremely difficult.

The method for generating machine learning data using the machine learning data generation apparatus 10 according to the present embodiment has been described in detail. Using this method to generate machine learning data has advantages described below.

First, machine learning data (specific data) used for a training step referred to as fine-tuning in machine learning is typically not easily available, with specific data pieces fewer than general data pieces. Further, specific data, which indicates specific knowledge, may involve a license from a third party for use in machine learning. When not licensed, such specific data cannot be used in machine learning. When a license is to be obtained from multiple licensors, the data cannot be used in machine learning unless licensed from all the licensors. Thus, specific data pieces, which are fewer and may also involve a license from a third party, are less easily available.

In contrast, with the method according to the present embodiment described above, portions (license-requested portions 24) to be licensed from a third party can be identified its location in the data (target data 21) for use in machine learning. A license can be obtained for each license-requested portion 24. A license-requested portion 24 that is not licensed can be replaced with an item (replacement data) that does not need any license from a third party. Thus, the target data 21 containing the license-requested portion 24 that is not licensed can be usable for machine learning. When a license is expected to be obtained with a slight correction, a relevant portion of the target data 21 can be replaced with replacement data with an appropriate correction. Such target data 21 can be usable for machine learning.

The replacement data can be prepared for each license-requested portion 24. Thus, after a license-requested portion 24 of the target data 21 that is not licensed is replaced with the replacement data, the affection to the meaning of the passage including the replaced portion can be reduced sufficiently. When a license-requested portion 24 of the target data 21 that is not licensed is blacked out or replaced with meaningless signs to be concealed, for example, the passage including the blacked-out or replaced portion may be meaningless. Such learning data is noise that may negatively affect machine learning, and is thus unusable as machine learning data. In contrast, with the method according to the present embodiment described above, a license-requested portion 24 of the target data 21 that is not licensed can be replaced with replacement data prepared in advance. This allows generation of machine learning data that can be fully usable for machine learning.

The license-requested portion 24 can be specified on a layer separate from the layer of the target data 21 (refer to FIG. 4). The license-requested portion 24 of the target data 21 can thus be easily identified without ambiguity. The license-requested portion 24 of the target data 21 can be identified precisely, thus facilitating preparation of replacement data for replacing the portion. Further, the license-requested portion information 22 can be easily added to the target data 21, without the target data 21 being directly modified.

When some license-requested portions 24 are to be obtained from multiple third parties, not all the license-requested portions 24 need to be successfully licensed from all the parties. When a license-requested portion 24 is not licensed from any of the third parties, the other license-requested portions 24 of the target data 21 that have been licensed can be used for machine learning.

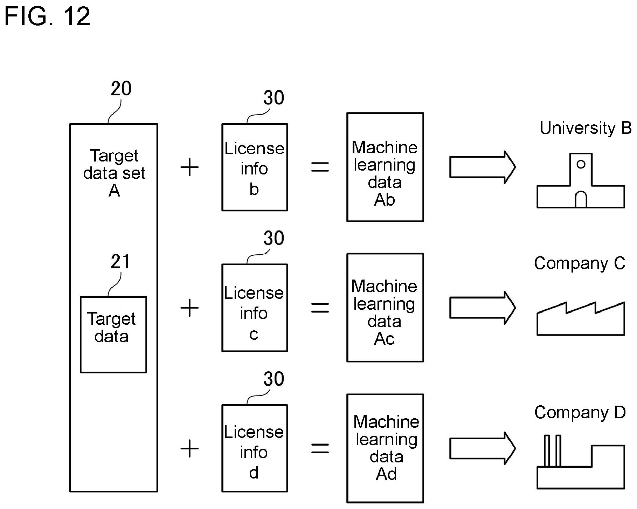

Although a license is not obtained from a third party, a license may be obtained depending on the licensor or the purpose or use of machine learning, or a license may be obtained with a slight correction. With the method according to the present embodiment described above, the license information 30 defines the license status for each license-requested portion 24. This can flexibly accommodate the above situations. This will now be described with reference to FIG. 12.

FIG. 12 is a diagram describing multiple types of machine learning data generated from the target data 21. In the illustrated example machine learning data for use in a university B, machine learning data for use in an affiliated company C, and machine learning data for use in a private company D are generated from the same target data 21. When the target data 21 is used for research at the university B, many license-requested portions 24 are expected to be licensed unless the portions contain trade secrets or other such information. When the target data 21 is used for product development at the affiliated company C, license-requested portions 24 containing trade secrets or other such information are expected to be licensed. When the target data 21 is used at the private company D, fewer license-requested portions 24 are expected to be licensed. Thus, license information 30 for the university (license information b), license information 30 for the affiliated company (license information c), and license information 30 for the private company (license information d) are produced. For the university B, the license information 30 for the university (license information b) is used for the target data set 20 including the target data 21 to generate machine learning data for the university (machine learning data Ab). For the company C, the license information 30 for the affiliated company (license information c) is used to generate machine learning data for the affiliated company (machine learning data Ac). For the company D, the license information 30 for the private company (license information d) is used to generate machine learning data for the private company (machine learning data Ad). Thus, multiple types of machine learning data can be generated from the same target data 21.

As described above, the method according to the present embodiment can easily prepare a sufficient volume of machine learning data (specific data) for fine-tuning, and thus can build a highly accurate estimation model through machine learning.

Each time machine learning data is generated, the replacement information 40 for the machine learning data is stored into the distributed ledger on the blockchain network 60 in a blockchain form. As is commonly known, data stored into the distributed ledger on the blockchain network 60 in a blockchain form is virtually impossible to tamper with. The structure thus facilitates later verification that the machine learning data has been generated under license from a third party. When the replacement information 40 contains information about the time and date at which the machine learning data is output, the identifiable time and date of generation of the machine learning data further facilitates the verification. This avoids a situation in which the estimation model generated through machine learning is to be discarded.

The machine learning data generation apparatus 10 according to the present embodiment has been described. However, the present invention is not limited to the above embodiment and may be implemented in various manners without departing from the spirit and scope of the invention.

### REFERENCE SIGNS LIST

- 10: machine learning data generation apparatus
- 11: target data reader
- 12: license information reader
- 13: machine learning data generator
- 14: replacement information storage
- 20: target data set
- 21: target data
- 22: license-requested portion information
- 23: replacement record set
- 24: license-requested portion
- 25: replacement data record
- 30: license information
- 31: license status record
- 40: replacement information
- 41: block data
- 50: server
- 60: blockchain network
- n1 to n4: node

## Claims

1. A machine learning data generation method for generating, with a computer, machine learning data to generate an estimation model through machine learning, the method comprising:
reading target data stored in a server;
reading license information indicating whether the target data is licensed for use in the machine learning; and
generating the machine learning data based on the target data and the license information,
wherein the reading the target data includes reading the target data to which license-requested portion information and replacement data are added, the license-requested portion information indicates one or more license-requested portions being one or more portions of the target data describing or representing an item to be licensed, and the replacement data is to replace the one or more license-requested portions of the target data when the one or more license-requested portions are not licensed, and
the generating includes generating the machine learning data by replacing the one or more license-requested portions of the target data with the replacement data based on the license information.

2. The method according to claim 1, wherein
the reading the target data includes reading the target data for which the license-requested portion information is described in a layer separate from a layer of the target data.

3. The method according to claim 2, wherein
the reading the target data includes reading the target data to which the replacement data is added for each of the one or more license-requested portions, and
the reading the license information includes reading the license information indicating whether each of the one or more license-requested portions is licensed.

4. The method according to any one of claims 1 to 3, wherein
the reading the license information includes reading the license information containing a partial license of the target data for use in the machine learning, and
the reading the target data includes reading the target data to which the replacement data corresponding to the partial license is added for a license-requested portion of the one or more license-requested portions for which the partial license is obtained.

5. The method according to any one of claims 1 to 3, further comprising:
generating replacement information during or after the generating the machine learning data and storing the replacement information into a distributed ledger in a blockchain form, the replacement information containing information for identifying the target data, the license-requested portion information, and the replacement data replacing each of the one or more license-requested portions.

6. A machine learning data generation apparatus for generating machine learning data to generate an estimation model through machine learning, the apparatus comprising:
a target data reader configured to read target data stored in a server;
a license information reader configured to read license information indicating whether the target data is licensed for use in the machine learning; and
a machine learning data generator configured to generate the machine learning data based on the target data and the license information,
wherein the target data reader reads the target data to which license-requested portion information and replacement data are added, the license-requested portion information indicates one or more license-requested portions being one or more portions of the target data describing or representing an item to be licensed, and the replacement data is to replace the one or more license-requested portions of the target data when the one or more license-requested portions are not licensed, and
the machine learning data generator generates the machine learning data by replacing the one or more license-requested portions of the target data with the replacement data based on the license information.
